# EUROPEAN PATENT SPECIFICATION

(11) **EP 2 868 936 B1**
(45) Date of publication and mention of the grant of the patent: **03.05.2017**
(21) Application number: 14191450.7
(22) Date of filing: 03.11.2014
(51) Int. Cl.: F16B 33/00

(54) **Screw fastener and fastening method using the same**
Schraubbefestigung und Befestigungsverfahren damit
Dispositif de fixation de vis et procédé de fixation l'utilisant

(30) Priority: 04.11.2013 TW 102140011
(43) Date of publication of application: 06.05.2015
(73) Proprietor: Hon Hai Precision Industry Co., Ltd., New Taipei City (TW)
(72) Inventor: Teng, Jung-Hua, New Taipei (TW)
(74) Representative: Huang, Chongguang

(56) References cited:
- EP-A1- 0 625 644
- US-A- 2 564 029

## Description

### BACKGROUND

### FIELD

The subject matter herein generally relates to fasteners, and particularly relates to a screw fastener and a fastening method using the same.

### BACKGROUND

When two workpieces are fixed to each other, fasteners can be used. A patent document of US 2,564,029A describes a bolt having a rib. The rib is provided with threads at its end. EP 0,625,644A1 describes a fastener including an annular body, which having a screw thread spiraling therearound.

### BRIEF DESCRIPTION OF THE DRAWINGS

Implementations of the present technology will now be described, by way of example only, with reference to the attached figures.
FIG. 1 is an isometric view of a first embodiment of a screw fastener including a first screw and a second screw.
FIG. 2 is a top plan view of the first screw of FIG.1.
FIG. 3 is a bottom plan view of the second screw of FIG.1.
FIG. 4 is an isometric view of a second embodiment of a screw fastener.
FIG. 5 is a flowchart of a first embodiment of a fastening method.
FIG. 6 is a flowchart of a second embodiment of a fastening method.
FIG. 7 is a flowchart of a third embodiment of a fastening method.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. Also, the description is not to be considered as limiting the scope of the embodiments described herein. The drawings are not necessarily to scale and the proportions of certain parts have been exaggerated to better illustrate details and features of the present disclosure.

Several definitions that apply throughout this disclosure will now be presented.

The term "coupled" is defined as connected, whether directly or indirectly through intervening components, and is not necessarily limited to physical connections. The connection can be such that the objects are permanently connected or releasably connected. The term "substantially" is defined to be essentially conforming to the particular dimension, shape, or other feature that the term modifies, such that the component need not be exact. For example, "substantially cylindrical" means that the object resembles a cylinder, but can have one or more deviations from a true cylinder. The term "comprising" when utilized, means "including, but not necessarily limited to"; it specifically indicates open-ended inclusion or membership in the so-described combination, group, series and the like.

The present disclosure is described in relation to fasteners, and particularly to a screw fastener and fastening method using the same.

A screw fastener can include a first screw having a threaded portion, and a second screw having a threaded hole. The first screw can define a first position portion. A center point of the first position portion can be perpendicularly connected to a center axis of the threaded portion to defining a first fictitious line segment. A thread starting point of the threaded portion can be perpendicularly connected to the center axis to defining a second fictitious line segment. The second screw can define a second position portion. A center point of the second position portion can be perpendicularly connected to a center axis of the threaded hole to defining a third fictitious line segment. A thread starting point of the threaded hole can be perpendicularly connected to the center axis to defining a fourth fictitious line segment. When the first screw is coaxial to the second screw and the second fictitious line segment is parallel to the fourth fictitious line segment, the third fictitious line segment can be parallel to the first fictitious line segment.

A first fastening method can include the following procedures. A robot can be provided. The robot can include a controlling system, a clamping mechanism, and a machine vision system. The clamping mechanism and the machine vision system can be in signal communication with the controlling system. A screw fastener mentioned above can be provided. Two workpieces being to fixed to each other can be provided. Each of the workpiece can define a though hole thereon. The first screw can be inserted through the through holes. The controlling system can control the clamping mechanism to move the second screw to a position adjacent to the first screw after the machine vision system recognize the first position portion and the second position portion. Such that the second position portion can be aligned to the first position portion. The clamping mechanism can rotate the second screw, thereby the second screw threading onto the first screw.

A second fastening method can include the following procedures. A robot can be provided. The robot can include a controlling system, a clamping mechanism, and a machine vision system. The clamping mechanism and the machine vision system can be in signal communication with the controlling system. A first screw having a first threaded portion and a first position portion can be provided. A center point of the first position portion can be perpendicularly connected to a center axis of the first threaded portion to define a first fictitious line segment. A thread starting point of the first threaded portion can be perpendicularly connected to the center axis to defining a second fictitious line segment. A workpiece having a second threaded portion configured to thread with the first threaded portion, and a second position portion adjacent to the second threaded portion can be provided. A center point of the second position portion can be perpendicularly connected to a center axis of the second threaded portion, to define a fifth fictitious line segment. A thread starting point of the second threaded portion can be perpendicularly connected to the center axis to defining a sixth fictitious line segment. When the second threaded portion is coaxial to the first screw, and the second fictitious line segment is parallel to the sixth fictitious line segment, the first fictitious line segment can be parallel to the fifth fictitious line segment. The controlling system can control the clamping mechanism to move the first screw to a position adjacent to the second threaded portion after the machine vision system recognize the first position portion and the second position portion. Such that the first position portion being aligned to the second position portion. The clamping mechanism can rotate the first screw, thereby the first screw threading into the second threaded portion.

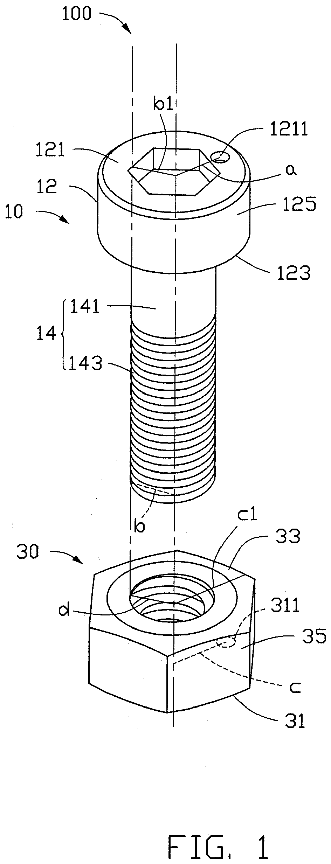

FIG. 1 illustrates an embodiment of a screw fastener 100. A fastening method can be carried out using the screw fastener 100 cooperating with an external robot (not shown). The screw fastener 100 can include a first screw 10 and a second screw 30 configured to thread onto the first screw 10. The robot can be configured to position the first screw 10 to a first workpiece (not shown), and enable the first screw 10 to insert through a second workpiece (not shown) stacked on the first workpiece, and move the second screw 30 to thread onto the first screw 10. Such that the first workpiece can be fixed to the second workpiece.

In the illustrated embodiment, the first screw 10 can be a six hexagon head bolt. The first screw 10 can include a head 12 and a shank 14 forming at an end of the head 12.

The head 12 can be substantially cylindrical. The head 12 can include a first end surface 121, a second end surface 123 parallel to the first end surface 121 and departing from the first end surface 121, and a first periphery 125 coupled to the first end surface 121 and the second end surface 123. The head 12 can define a first position portion 1211 on the first end surface 121. The first position portion 1211 can be configured to position the second screw 30. In the illustrated embodiment, the first position portion 1211 can be a sunken portion.

The shank 14 can protrude from the first end surface 121, and can include a polished portion 141 coupled to the head 12, and a threaded portion 143 coupled to an end of the polished portion 141. The threaded portion 143 can be configured to couple with the second screw 30.

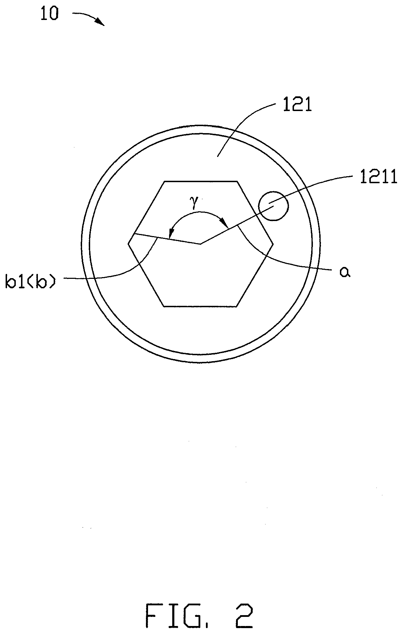

Referring to FIGS. 1 and 2, a center point of the first position portion 1211 can be perpendicularly connected to a center axis of the threaded portion 143 to define a first fictitious line segment ***a***. A thread starting point of the threaded portion 143 can be perpendicularly connected to the center axis of the threaded portion 143 to define a second fictitious line segment ***b***. A first plane (not shown) can be defined by the first fictitious line segment ***a***, and perpendicular to the center axis of the threaded portion 143. In the illustrated embodiment, the first end surface 121 can be a flat plane. The first plane and the first end surface 121 can be in a superposition. A first projection line ***b1*** can be defined when the second fictitious line segment ***b*** is projected to the first plane. The first projection line ***b1*** and the first fictitious line segment ***a*** can define a first included angle ***γ*** (shown in FIG. 2).

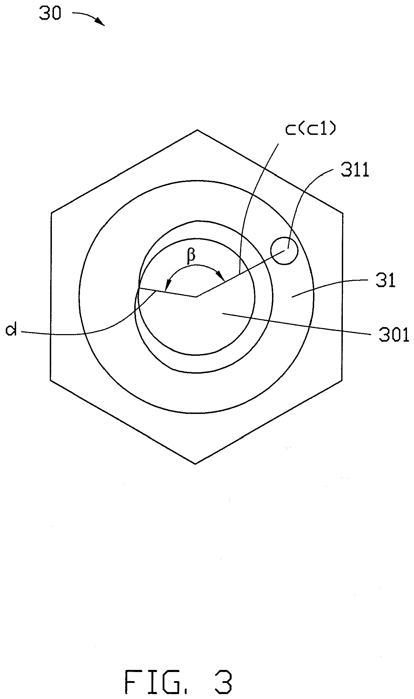

Referring to FIGS. 1 and 3, in the illustrated embodiment, the second screw 30 can be a hexagonal nut configured to thread onto the first screw 10. The second screw 30 can define a threaded hole 301 configured to engage with the threaded portion 143. The second screw 30 can include a third end surface 31, a fourth end surface 33 parallel to the third end surface 31 and departing from the third end surface 31, and a second periphery 35 coupled to the third end surface 31 and the fourth end surface 33. The third end surface 31 can be away from the first screw 10. The threaded hole 301 can extend from the third end surface 31 through the fourth end surface 33. The second screw 30 can define a second position portion 311 on the third end surface 31 corresponding to the first position portion 1211. The second position portion 311 can be configured to cooperate with the first position portion 1211 to position the second screw 30 relative to the first screw 10. In the illustrated embodiment, the second position portion 311 can be a sunken portion.

A center point of the second position portion 311 can be perpendicularly connected to a center axis of the threaded hole 301 to define a third fictitious line segment ***c***. A thread starting point of the threaded hole 301 can be perpendicularly connected to the center axis of the threaded hole 301 to define a fourth fictitious line segment ***d**.* A second plane (not shown) can be defined by the fourth fictitious line segment ***d,*** and perpendicular to the center axis of the threaded hole 301. In the illustrated embodiment, the third end surface 31 can be a flat plane. The second plane and the third end surface 31 can be in a superposition. A second projection line ***c1*** can be defined when the third fictitious line segment c is projected to the second plane. The second projection line ***c1*** and the fourth fictitious line segment ***d*** can define a second included angle ***β*** (shown in FIG. 3). The first included angle ***γ*** can be equal to the second included angle ***β***.

A third plane (not shown) can be defined as being perpendicular to the center axis of the threaded hole 301. When the thread hole 301 is coaxial to the threaded portion 143 and the thread starting point of the threaded hole 301 is aligned to the same of the threaded portion 143, the first included angle γ can be projected to the third plane (not shown) to define a first projection angle (not shown); the second included angle ***β*** can be projected to the third plane to define a second projection angle (not shown). The first projection angle and the second projection angle can be in a superposition.

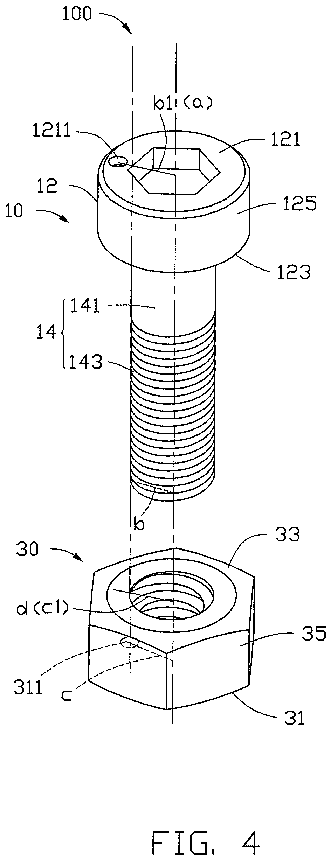

Referring to FIG. 4, in an alternative embodiment, the first included angle ***γ*** and the second included angle ***β*** can be about or more than 0 degrees. When the first included angle ***γ*** and the second included angle ***β*** are 0 degrees, the first fictitious line segment ***a*** can be parallel to the second fictitious line segment ***b*** (shown in FIG. 4), and the third fictitious line segment ***c*** can be parallel to the fourth fictitious line segment ***d.*** The fictitious line segment ***a*** and the first projection line ***b1*** can be in collineation, the second projection line ***c1*** and the fourth fictitious line segment ***d*** can be in collineation.

In an alternative embodiment, the first position portion 1311 can be defined at other location except the first end surface 121. For example, but not limited to, the first position portion 1211 can be defined on the second end surface 123 or the first periphery 125. Furthermore, the first position portion 1211 can be defined on the polished portion 141 of the shank 14. Such that, when the first screw 10 is coaxial to the second screw 30, and the second fictitious line segment ***b*** is parallel to the fourth fictitious line segment ***d,*** the first fictitious line segment ***a*** can be parallel to the third fictitious line segment ***c***. In addition, there can be one or more first position portions 1211, the one or more first position portions 1211 can be defined on at least one of the surfaces as following: the first end surface 121, the second end surface 123, the first periphery 125, and a surface of the polished portion 141. Similarly, there can be one or more second position portions 311, the one or more second position portions 311 can be defined on at least one of the surfaces as following: the third end surface 31, the fourth end surface 33, and the second periphery 35.

In an alternative embodiment, the first position portion 1211 can be in other shapes except a sunken portion. For example, but not limited to, the first position portion 1211 can be a protruding portion, a nick, or a planar mark on the first screw 10. Furthermore, the first position portion 1211 can be a sensor positioned in the first screw 10. Such that the first position portion 1211 can be recognized by an external machine vision (not shown). Similarly, the second position portion 311 can be a protruding portion, a nick, a planar mark, a sensor, or other structure that can be recognized by the external machine vision.

In an alternative embodiment, the first screw 10 can be other screw fasteners such as, but not limited to, a double-screw bolt or other external screw fasteners. Similarly, the second screw 30 can be other screw fasteners such as, but not limited to, a round nut, or other internal screw fasteners, which can be threaded onto the first screw 10.

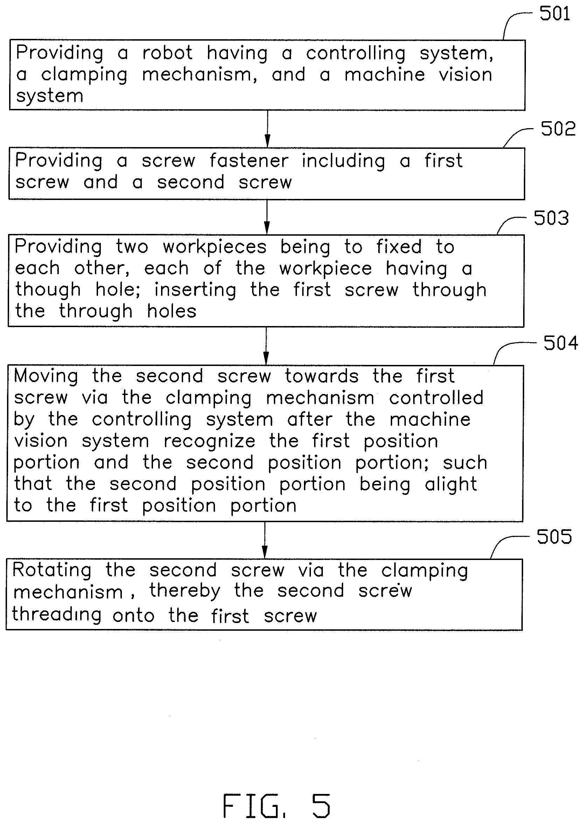

FIG. 5 illustrates a flowchart in accordance with a first example embodiment. The first example method is provided by way of example, as there are a variety of ways to carry out the method. The method described below can be carried out using the configurations illustrated in FIGS. 1-3, for example, and various elements of these figures are referenced in explaining example method. Each block shown in FIG. 5 represents one or more processes, methods, or subroutines, carried out in the first example method. Additionally, the illustrated order of blocks is by example only and the order of the blocks can change. The first example method for fastening can be carried out using a screw fastener cooperating with a robot (not shown), in order to fix two workpieces to each other. The first example method for fastening can begin at block 501.

At block 501, a robot can be provided. The robot can include a controlling system, a clamping mechanism, and a machine vision system. The lamping mechanism and the machine vision system can be in signal communication with the controlling system. The machine vision system can include an image acquisition module and a visual processing module. The image acquisition module can be configured to acquire a picture of the environment around of. The visual processing module can be configured to analysis the data of the picture to recognize objects in the picture, and deliver and transfer information of the objects to the controlling system. The controlling system can be configured to control the clamping mechanism to work according to the information.

At block 502, a screw fastener can be provided. The screw fastener can include a first screw and a second screw configured to thread onto the first screw. The first screw can define an external threaded portion and a first position portion thereon. The first position portion can be corresponding to a thread starting point of the threaded portion. The second screw can define a threaded hole and a second position portion thereon. The second position portion can be corresponding to a thread starting point of the threaded hole.

At block 503, two workpieces can be provided, and will be fixed to each other. Each of the workpieces can define a through hole thereon, and the two through holes can be coaxial to each other. The first screw can be inserted through the through holes.

At block 504, the controlling system can control the clamping mechanism to catch and hold the second screw after the machine vision system recognize the first position portion and the second position portion. The clamping mechanism can move the second screw to a position adjacent to an end of the first screw. The second screw can be positioned coaxially to the first screw, and the second position portion can be aligned to the first position portion. Such that the thread starting point of the threaded hole can be aligned to the thread starting point of the threaded portion.

At block 505, the clamping mechanism can rotate the second screw, enabling the second screw to sleeve and thread onto the first screw.

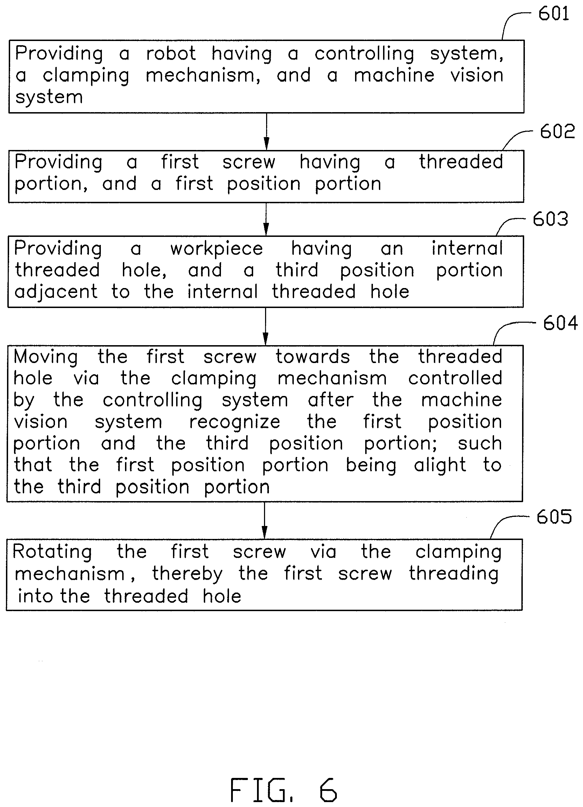

FIG. 6 illustrates a flowchart in accordance with a second example embodiment. The second example method is provided by way of example, as there are a variety of ways to carry out the method. The method described below can be carried out using the configurations illustrated in FIGS. 1-3, for example, and various elements of these figures are referenced in explaining example method. Each block shown in FIG. 6 represents one or more processes, methods, or subroutines, carried out in the second example method. Additionally, the illustrated order of blocks is by example only and the order of the blocks can change. The second example method for fastening can be carried out using a first screw cooperating with a robot (not shown), in order to fix a workpiece having an internal threaded hole thereon. The second example method for fastening can begin at block 601.

At block 601, a robot can be provided. The robot can include a controlling system, a clamping mechanism, and a machine vision system. The lamping mechanism and the machine vision system can be in signal communication with the controlling system. The machine vision system can include an image acquisition module and a visual processing module. The image acquisition module can be configured to acquire a picture of the environment around of. The visual processing module can be configured to analysis the data of the picture to recognize objects in the picture, and deliver and transfer information of the objects to the controlling system. The controlling system can be configured to control the clamping mechanism to work according to the information.

At block 602, a first screw can be provided. The first screw can define a threaded portion, and a first position portion adjacent to the threaded portion. A center point of the first position portion can be perpendicularly connected to a center axis of the threaded portion to define a first fictitious line segment. A thread starting point of the threaded portion can be perpendicularly connected to the center axis to define a second fictitious line segment.

At block 603, a workpiece can be provided. The workpiece can define an internal threaded hole, and a third position portion adjacent to the internal threaded hole. A center point of the third position portion can be perpendicularly connected to a center axis of the threaded hole, to define a fifth fictitious line segment. A thread starting point of the threaded portion can be perpendicularly connected to the center axis to define a sixth fictitious line segment. When the threaded hole on the workpiece is coaxial to the first screw, and the second fictitious line segment is parallel to the sixth fictitious line segment, the first fictitious line segment can be parallel to the fifth fictitious line segment.

At block 604, the controlling system can control the clamping mechanism to catch and hold the first screw after the machine vision system recognize the first position portion and the third position portion. The clamping mechanism can move the first screw to a position adjacent to the threaded hole on the workpiece. The first screw can be positioned coaxially to the threaded hole, and the first position portion can be aligned to the third position portion, the second fictitious line segment can be parallel to the sixth fictitious line segment. Such that the first fictitious line segment can be parallel to the fifth fictitious line segment, and the thread starting portion of the threaded portion can be aligned to the thread starting portion of the internal threaded hole.

At block 605, the clamping mechanism can rotate the first screw, enabling the first screw to insert and thread into the threaded hole.

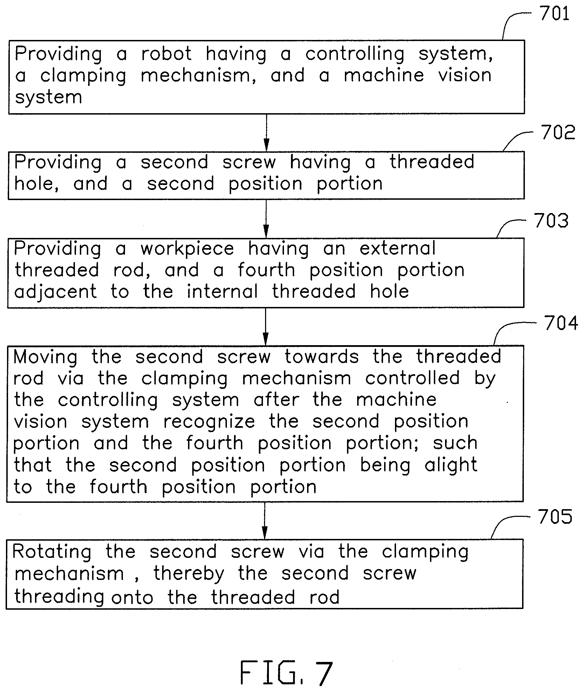

FIG. 7 illustrates a flowchart in accordance with a third example embodiment. The third example method is provided by way of example, as there are a variety of ways to carry out the method. The method described below can be carried out using the configurations illustrated in FIGS. 1-3, for example, and various elements of these figures are referenced in explaining example method. Each block shown in FIG. 7 represents one or more processes, methods, or subroutines, carried out in the third example method. Additionally, the illustrated order of blocks is by example only and the order of the blocks can change. The third example method for fastening can be carried out using a second screw cooperating with a robot (not shown), in order to fix a workpiece having an external threaded rod thereon. The third example method for fastening can begin at block 701.

At block 701, a robot can be provided. The robot can include a controlling system, a clamping mechanism, and a machine vision system. The lamping mechanism and the machine vision system can be in signal communication with the controlling system. The machine vision system can include an image acquisition module and a visual processing module. The image acquisition module can be configured to acquire a picture of the environment around of. The visual processing module can be configured to analysis the data of the picture to recognize objects in the picture, and deliver and transfer information of the objects to the controlling system. The controlling system can be configured to control the clamping mechanism to work according to the information.

At block 702, a second screw can be provided. The second screw can define a threaded hole, and a second position portion adjacent to the threaded hole. A center point of the second position portion can be perpendicularly connected to a center axis of the threaded hole, to define a third fictitious line segment. A thread starting point of the threaded hole can be perpendicularly connected to the center axis to define a fourth fictitious line segment.

At block 703, a workpiece can be provided. The workpiece can include an external threaded rod, and define a fourth position adjacent to the thread rod. A center point of the fourth position portion can be perpendicularly connected to a center axis of the threaded rod, to define a seventh fictitious line segment. A thread starting point of the threaded hole can be perpendicularly connected to the center axis to defining an eighth fictitious line segment. When the threaded rod is coaxial to the second screw, and the fourth fictitious line segment is parallel to the eighth fictitious line segment, the third fictitious line segment can be parallel to the seven fictitious line segment.

At block 704, the controlling system can control the clamping mechanism to catch and hold the second screw after the machine vision system recognize the second position portion and the fourth position portion. The clamping mechanism can move the second screw to a position adjacent to an end of the threaded rod on the workpiece. The second screw can be positioned coaxially to the threaded rod, and the second position portion can be aligned to the fourth position portion, the fourth fictitious line segment can be parallel to the eighth fictitious line segment. Such that the third fictitious line segment can be parallel to the seventh fictitious line segment, and the thread starting portion of the threaded rod can be aligned to the thread starting portion of the internal threaded hole.

At block 705, the clamping mechanism can rotate the second screw, enabling the second screw to sleeve and thread onto the threaded rod.

While the present disclosure has been described with reference to particular embodiments, the description is illustrative of the disclosure and is not to be construed as limiting the disclosure. Therefore, those of ordinary skill in the art can make various modifications to the embodiments without departing from the scope of the disclosure, as defined by the appended claims.

## Claims

1. A screw fastener (100), **characterized by** comprising:
a first screw (10) having a threaded portion (143); the first screw (10) defining a first position portion (1211), wherein a center point of the first position portion (1211) is perpendicularly connected to a center axis of the threaded portion (143) to define a first fictitious line segment **(*a*)**, and wherein a thread starting point of the threaded portion (143) is perpendicularly connected to the center axis to define a second fictitious line segment **(*b*)**; and
a second screw (30) having a threaded hole, the second screw (30) defining a second position portion (311), wherein a center point of the second position portion (311) is perpendicularly connected to a center axis of the threaded hole to define a third fictitious line segment **(*c*)**, and wherein a thread starting point of the threaded hole is perpendicularly connected to the center axis of the threaded hole to define a fourth fictitious line segment **(*d*)**;
wherein, the first screw (10) and the second screw (30) are configured such that when the first screw (10) is coaxial to the second screw (30) and the second fictitious line segment **(*b*)** is parallel to the fourth fictitious line segment **(*d*)**, the third fictitious line segment **(*c*)** is parallel to the first fictitious line segment **(*a*)**; wherein the first screw (10) comprises a head (12) and a shank (14) coupled to the head (12), the threaded portion (143) is positioned on the shank (14), the first position portion (1211) is positioned on the head (12).

2. The screw fastener (100) of claim 1, wherein an imaginary line of connecting the first position portion (1211) and the thread starting point of the threaded portion (143) is coplanar to the center axis of the threaded portion (143), such that the first fictitious line segment **(*a*)** is parallel to the second fictitious line segment **(*b*)***;* an imaginary line of connecting the second position portion (311) and the thread starting point of the threaded hole is coplanar to the center axis of the threaded hole, such that the third fictitious line segment **(*c*)** is parallel to the fourth fictitious line segment **(*d*)**.

3. The screw fastener (100) of claim 1, wherein the head (12) comprises a first end surface (121), the shank (14) comprises a polished portion (141) coupled to the first end surface (121), the threaded portion (143) is coupled to an end of the polished portion (141) away from the first end surface (121), the first position portion (1211) is positioned on the first end surface (121) and corresponds to the thread starting point of the threaded portion (143).

4. The screw fastener (100) of claim 1, wherein the second screw (30) comprises a third end surface (31), a fourth end surface (33) parallel to the third end surface (31) and departing from the third end surface (31); the threaded hole extends from the third end surface (31) through the fourth end surface (33).

5. The screw fastener (100) of claim 4, wherein the second position portion (311) is positioned on the third end surface (31) and corresponds to the thread starting point of the threaded hole.

6. The screw fastener (100) of any of claims 1 to 5, wherein the first screw 10 is a bolt, the second screw 30 is a nut configured to thread with the bolt.

7. A fastening method comprising:
providing a robot having a controlling system, a clamping mechanism, and a machine vision system; the clamping mechanism and the machine vision system being in signal communication with the controlling system;
providing a screw fastener (100) comprising a first screw (10) and a second screw (30) configured to thread with the first screw (10), wherein the first screw (10) comprises a threaded portion (143) and a first position portion (1211) adjacent to the threaded portion (143); the second screw (30) defines a threaded hole and a second position portion (311) corresponding to the first position portion (1211), the first screw (10) comprises a head (12) and a shank (14) coupled to the head (12), the threaded portion (143) is positioned on the shank (14), and the first position portion (1211) is positioned on the head (12);
providing two workpieces being to fixed to each other, each of the workpiece having a though hole, inserting the first screw (10) through the through holes;
moving the second screw (30) to a position adjacent to the first screw (10) via the clamping mechanism controlled by the controlling system after the machine vision system recognize the first position portion (1211) and the second position portion (311); such that the second position portion (311) being aligned to the first position portion (1211); and
rotating the second screw (30) via the clamping portion, thereby the second screw (30) threading onto the first screw (10).

8. A fastening method comprising:
providing a robot having a controlling system, a clamping mechanism, and a machine vision system; the clamping mechanism and the machine vision system being in signal communication with the controlling system;
providing a first screw (10) having a first threaded portion (143), and a first position portion (1211); wherein a center point of the first position portion (1211) is perpendicularly connected to a center axis of the first threaded portion (143) to define a first fictitious line segment **(*a*)**; a thread starting point of the first threaded portion (143) is perpendicularly connected to the center axis to define a second fictitious line segment **(*b*)**, the first screw (10) comprises a head (12) and a shank (14) coupled to the head (12), the first threaded portion (143) is positioned on the shank (14), and the first position portion (1211) is positioned on the head (12);
providing a workpiece having a second threaded portion (143) configured to thread with the first threaded portion (143), and a second position portion (311) adjacent to the second threaded portion (143); wherein a center point of the second position portion (311) is perpendicularly connected to a center axis of the second threaded portion (143) to define a fifth fictitious line segment; a thread starting point of the second threaded portion (143) is perpendicularly connected to the center axis of the second threaded portion (143) to define a sixth fictitious line segment; when the second threaded portion (143) is coaxial to the first threaded portion (143) on first screw (10), and the second fictitious line segment **(*b*)** is parallel to the sixth fictitious line segment, the first fictitious line segment **(*a*)** is parallel to the fifth fictitious line segment.
moving the first screw (10) to a position adjacent to the second threaded portion (143) via the clamping mechanism controlled by the controlling system after the machine vision system recognize the first position portion (1211) and the second position portion (311); such that the first position portion (1211) being aligned to the second position portion (311); and
rotating the first screw (10) via the clamping portion, thereby the first screw (10) threading into the second threaded portion (143).

9. The fastening method of claim 8, wherein machine vision system comprises an image acquisition module configured to acquire a picture of an external environment, and a visual processing module configured to analysis the data of the picture to recognize objects in the picture, and deliver and transfer information of the objects to the controlling system.

10. The fastening method of any of claims 8 and claim 9, wherein the first screw (10) is a bolt, the first threaded portion (143) is an external thread forming on the first screw (10); the second threaded portion (143) is an internal threaded forming on the workpiece.

11. The fastening method of any of claims 8 and 9, wherein the head (12) comprises a first end surface (121), the shank (14) comprises a polished portion (141) coupled to the first end surface (121), the first threaded portion (143) is coupled to an end of the polished portion (141) away from the first end surface (121), the first position portion (1211) is positioned on the first end surface (121) and corresponds to the thread starting point of the first threaded portion (143).

12. The fastening method of any of claims 8 and claim 9, wherein the first screw (10) is a nut, the first threaded portion (143) is an internal thread forming on the first screw (10); the second threaded portion (143) is an external threaded forming on the workpiece.

13. The fastening method of claim 12, wherein the first screw (10) comprises a third end surface (31), a fourth end surface (33) parallel to the third end surface (31) and departing from the third end surface (31); the first threaded portion (143) extends from the third end surface (31) through the fourth end surface (33), the first position portion (1211) is positioned on the third end surface (31) and corresponds to the thread starting point of the first threaded portion (143).

## Patentansprüche

1. Schraubenbefestigungselement (100), **dadurch gekennzeichnet, dass** es umfasst:
eine erste Schraube (10) mit einem Gewindeabschnitt (143); wobei die erste Schraube (10) einen ersten Positionsabschnitt (1211) definiert, wobei ein Mittelpunkt des ersten Positionsabschnitts (1211) mit einer Mittenachse des Gewindeabschnitts (143) rechtwinklig verbunden ist, um ein erstes fiktives Liniensegment **(*a*)** zu definieren, und wobei ein Gewindeanfangspunkt des Gewindeabschnitts (143) mit der Mittenachse rechtwinklig verbunden ist, um ein zweites fiktives Liniensegment **(*b*)** zu definieren; und
eine zweite Schraube (30) mit einem Gewindeloch, wobei die zweite Schraube (30) einen zweiten Positionsabschnitt (311) definiert, wobei ein Mittelpunkt des zweiten Positionsabschnitts (311) mit einer Mittenachse des Gewindelochs rechtwinklig verbunden ist, um ein drittes fiktives Liniensegment **(*c*)** zu definieren, und wobei ein Gewindeanfangspunkt des Gewindelochs mit der Mittenachse des Gewindelochs rechtwinklig verbunden ist, um ein viertes fiktives Liniensegment **(*d*)** zu definieren;
wobei die erste Schraube (10) und die zweite Schraube (30) so ausgebildet sind, dass wenn die erste Schraube (10) koaxial zu der zweiten Schraube (30) ist und das zweite fiktive Liniensegment **(*b*)** parallel zu dem vierten fiktiven Liniensegment **(*d*)** ist, das dritte fiktive Liniensegment **(*c*)** parallel zu dem ersten fiktiven Liniensegment **(*a*)** ist; wobei die erste Schraube (10) einen Kopf (12) aufweist und einen Schaft (14), der an den Kopf (12) gekoppelt ist, wobei der Gewindeabschnitt (143) an dem Schaft (14) positioniert ist, wobei der erste Positionsabschnitt (1211) an dem Kopf (12) positioniert ist.

2. Schraubenbefestigungselement (100) nach Anspruch 1, wobei eine imaginäre Linie aus dem Verbinden des ersten Positionsabschnitts (1211) und dem Gewindeanfangspunkt des Gewindeabschnitts (143) koplanar zu der Mittenachse des Gewindeabschnitts (143) ist, so dass das erst fiktive Liniensegment **(*a*)** parallel zu dem zweiten fiktiven Liniensegment (***b***) ist; wobei eine imaginäre Linie aus dem Verbinden des zweiten Positionsabschnitts (311) und dem Gewindeanfangspunt des Gewindelochst koplanar zu der Mittenachse des Gewindelochs ist, so dass das dritte fiktive Linensegment **(*c*)** parallel zu dem vierten Liniensegment **(*d*)** ist.

3. Schraubenbefestigungselement (100) nach Anspruch 1, wobei der Kopf (12) eine erste Endfläche (121) aufweist, der Schaft (14) einen polierten Abschnitt (141) aufweist, der an die erste Endfläche (121) gekoppelt ist, wobei der Gewindeabschnitt (143) an ein Ende des polierten Abschnitts (141), abgewandt von der ersten Endfläche (121) gekoppelt ist, wobei der erste Positionsabschnitt (1211) an der ersten Endfläche (121) positioniert ist und mit dem Gewindeanfangspunkt des Gewindeabschnitts (143) korrespondiert.

4. Schraubenbefestigungselement (100) nach Anspruch 1, wobei die zweite Schraube (30) eine dritte Endfläche (31), eine vierte Endfläche (33), die parallel zu der dritten Endfläche (31) ist und von der dritten Endfläche (31) weg verläuft, aufweist; wobei das Gewindeloch sich von der dritten Endfläche (31) durch die vierte Endfläche (33) erstreckt.

5. Schraubenbefestigungselement (100) nach Anspruch 4, wobei der zweite Positionsabschnitt (311) an der dritten Endfläche (31) positioniert ist und mit dem Gewindeanfangspunkt des Gewindelochs korrespondiert.

6. Schraubenbefestigungselement (100) nach einem der Ansprüche 1 bis 5, wobei die erste Schraube 10 ein Bolzen ist, die zweite Schraube 30 eine Nut ist, die ausgebildet ist, mit dem Bolzen zu kämmen.

7. Befestigungsverfahren, umfassend:
Bereitstellen eines Roboters mit einem Regelsystem, einem Klemmmechanismus und einem Maschinensichtsystem; wobei der Klemmmechanismus und das Maschinensichtsystem sich in Signalkommunikation mit dem Regelsystem befinden;
Bereitstellen eines Schraubenbefestigungselements (100), umfassend eine erste Schraube (10) und eine zweite Schraube (30), die ausgebildet ist, mit der ersten Schraube (10) zu kämmen, wobei die erste Schraube (10) einen Gewindeabschnitt (143) aufweist und einen ersten, an den Gewindeabschnitt (143) angrenzenden Positionsabschnitt (1211); wobei die zweite Schraube (30) ein Gewindeloch definiert und der zweite Positionsabschnitt (311) mit dem ersten Positionsabschnitt (1211) korrespondiert, wobei die erste Schraube (10) einen Kopf (12) und einen Schaft (14), der mit dem Kopf (12) gekoppelt ist, aufweist, wobei der Gewindeabschnitt (143) an dem Schaft (14) positioniert ist und der erste Positionsabschnitt (1211) an dem Kopf (12) positioniert ist;
Bereitstellen zweiter Werkstücke, die an einander zu fixieren sind, wobei jedes der Werkstücke ein Durchgangsloch aufweist, und Einführen der ersten Schraube (10) durch die Durchgangslöcher;
Bewegen der zweiten Schraube (30) in eine an die erste Schraube (10) angrenzende Position über den Klemmmechanismus, der mittels des Regelsystems geregelt wird, nachdem das Maschinensichtsystem den ersten Positionsabschnitt (1211) und den zweiten Positionsabschnitt (311) erkannt hat, so dass der zweite Positionsabschnitt (311) zu dem ersten Positionsabschnitt (1211) ausgerichtet ist; und
Drehen der zweiten Schraube (30) mittels des Klemmabschnitts, und dadurch Verschrauben der zweiten Schraube (30) an die erste Schraube (10).

8. Befestigungsverfahren, umfassend:
Bereitstellen eines Roboters mit einem Regelsystem, einem Klemmmechanismus und einem Maschinensichtsystem; wobei der Klemmmechanismus und das Maschinensichtsystem sich in Signalkommunikation mit dem Regelsystem befinden;
Bereitstellen einer ersten Schraube (10) mit einem ersten Gewindeabschnitt (143) und einem ersten Positionsabschnitt (1211); wobei ein Mittelpunkt des ersten Positionsabschnitts (1211) mit einer Mittenachse des ersten Gewindeabschnitts (143) rechtwinklig verbunden ist, um ein erstes fiktives Liniensegment **(*a*)** zu definieren; wobei ein Gewindeanfangspunkt des ersten Gewindeabschnitts (143) mit der Mittenachse rechtwinklig verbunden ist, um ein zweites fiktives Liniensegment **(*b*)** zu definieren, wobei die erste Schraube (10) einen Kopf (12) und einen Schaft (14), der an den Kopf (12) gekoppelt ist, aufweist, wobei der erste Gewindeabschnitt (143) an dem Schaft (14) positioniert ist, und der erste Positionsabschnitt (1211) an dem Kopf (12) positioniert ist;
Bereitstellen eines Werkstücks mit einem zweiten Gewindeabschnitt (143), der ausgebildet ist, mit dem ersten Gewindeabschnitt (143) zu kämmen, und einen zweiten, an den zweiten Gewindeabschnitt (143) angrenzenden Positionsabschnitt (311); wobei ein Mittelpunkt des zweiten Positionsabschnitts (311) an eine Mittenachse des zweiten Gewindeabschnitts (143) rechtwinklig verbunden ist, um ein fünftes fiktives Liniensegment zu definieren; wobei ein Gewindeanfangspunkt des zweiten Gewindeabschnitts (143) mit der Mittenachse des zweiten Gewindeabschnitts (143) rechtwinklig verbunden ist, um ein sechstes fiktives Liniensegment zu definieren; wenn der zweite Gewindeabschnitt (143) koaxial zu dem ersten Gewindeabschnitt (143) an der ersten Schraube (10) ist, und das zweite fiktive Liniensegment **(*b*)** parallel ist zu dem sechsten fiktiven Liniensegment, wobei das erste fiktive Liniensegment **(*a*)** parallel ist zu dem fünften fiktiven Liniensegment.
Bewegen der ersten Schraube (10) in eine an den zweiten Gewindeabschnitt (143) angrenzende Position mittels des Klemmmechanismus, der mittels des Regelsystems geregelt wird, nachdem das Maschinensichtsystem den ersten Positionsabschnitt (1211) und den zweiten Positionsabschnitt (311) erkennt; so dass der erste Positionsabschnitt (1211) zu dem zweiten Positionsabschnitt (311) ausgerichtet ist; und
Drehen der ersten Schraube (10) mittels des Klemmabschnitts, und dadurch Verschrauben der ersten Schraube (10) in den zweiten Gewindeabschnitt (143).

9. Befestigungsverfahren nach Anspruch 8, wobei das Maschinensichtsystem ein Bilderfassungsmodul aufweist, das ausgestaltet ist, ein Bild aus einem äußeren Umfeld zu erfassen, und ein visuelles Verarbeitungsmodul, das ausgestaltet ist, die Daten des Bildes zu analysieren, um Objekte in dem Bild zu erkennen, und Liefern und Übertragen von Informationen der Objekte an das Regelsystem.

10. Befestigungsverfahren nach einem der Ansprüche 8 und Anspruch 9, wobei die erste Schraube (10) ein Bolzen ist, wobei der erste Gewindeabschnitt (143) ein Außengewinde ist, das an der ersten Schraube (10) ausgebildet ist; wobei der zweite Gewindeabschnitt (143) ein Innengewinde ist, dass an dem Werkstück ausgebildet ist.

11. Befestigungsverfahren nach einem der Ansprüche 8 und 9, wobei der Kopf (12) eine erste Endfläche (121) aufweist, der Schaft (14) einen polierten Abschnitt (141) aufweist, der an die erste Endfläche (121) gekoppelt ist, wobei der erste Gewindeabschnitt (143) an ein Ende des polierten Abschnitts (141) abseits der ersten Endfläche (121) gekoppelt ist, wobei der erste Positionsabschnitt (1211) an der ersten Endfläche (121) positioniert ist und mit dem Gewindeanfangspunkt des ersten Gewindeabschnitts (143) korrespondiert.

12. Befestigungsverfahren nach einem der Ansprüche 8 und Anspruch 9, wobei die erste Schraube (10) eine Nut ist, wobei der erste Gewindeabschnitt (143) ein Innengewinde ist, das an der ersten Schraube (10) ausgebildet ist; wobei der zweite Gewindeabschnitt (143) ein Außengewinde ist, das an dem Werkstück ausgebildet ist.

13. Befestigungsverfahren nach Anspruch 12, wobei die erste Schraube (10) eine dritte Endfläche (31) aufweist, eine vierte Endfläche (33), die parallel zu der dritten Endfläche (31) verläuft und von der dritten Endfläche (31) weg verläuft; wobei der erste Gewindeabschnitt (143) sich von der dritten Endfläche (31) durch die vierte Endfläche (33) erstreckt, wobei der erste Positionsabschnitt (1211) an der dritten Endfläche (31) positioniert ist und mit dem Gewindeanfangspunkt des ersten Gewindeabschnitt (143) korrespondiert.

## Revendications

1. Fixation à vis (100), **caractérisée par le fait qu'**elle comprend :
une première vis (10) possédant une portion filetée (143) ; la première vis (10) définissant une première portion de position (1211), dans laquelle un point central de la première portion de position (1211) est relié perpendiculairement à un axe central de la portion filetée (143) pour définir un premier segment de droite fictif **(*a*),** et dans laquelle un point de départ du filet de vis de la portion filetée (143) est relié perpendiculairement à l'axe central pour définir un deuxième segment de droite fictif (***b***) ; et
une seconde vis (30) possédant un trou taraudé, la seconde vis (30) définissant une seconde portion de position (311), dans laquelle un point central de la seconde portion de position (311) est relié perpendiculairement à un axe central du trou taraudé pour définir un troisième segment de droite fictif (***c***), et dans laquelle un point de départ du filet de vis du trou taraudé est relié perpendiculairement à l'axe central du trou taraudé pour définir un quatrième segment de droite fictif (***d***) ;
dans laquelle la première vis (10) et la seconde vis (30) sont configurées d'une manière telle que, lorsque la première vis (10) est coaxiale à la seconde vis (30) et le deuxième segment de droite fictif (***b***) est parallèle au quatrième segment de droite fictif (***d***), le troisième segment de droite fictif (***c***) est parallèle au premier segment de droite fictif **(*a*)**; dans laquelle la première vis (10) comprend une tête (12) et une tige (14) couplée à la tête (12), la portion filetée (143) est disposée sur la tige (14), la première portion de position (1211) est disposée sur la tête (12).

2. Fixation à vis (100) selon la revendication 1, dans laquelle une ligne imaginaire reliant la première portion de position (1211) et le point de départ du filet de vis de la portion filetée (143) est coplanaire à l'axe central de la portion filetée (143), d'une manière telle que le premier segment de droite fictif **(*a*)** est parallèle au deuxième segment de droite fictif (***b***) ; une ligne imaginaire reliant la seconde portion de position (311) et le point de départ du filet de vis du trou taraudé est coplanaire à l'axe central du trou taraudé, d'une manière telle que le troisième segment de droite fictif (***c***) est parallèle au quatrième segment de droite fictif (***d***).

3. Fixation à vis (100) selon la revendication 1, dans laquelle la tête (12) comprend une première surface terminale (121), la tige (14) comprend une portion polie (141) couplée à la première surface terminale (121), la portion filetée (143) est couplée à une extrémité de la portion polie (141) à l'écart de la première surface terminale (121), la première portion de position (1211) est disposée sur la première surface terminale (121) et correspond au point un départ du filet de vis de la portion filetée (143).

4. Fixation à vis (100) selon la revendication 1, dans laquelle la seconde vis (30) comprend une troisième surface terminale (31), une quatrième surface terminale (33) parallèle à la troisième surface terminale (31) et s'écartant de la troisième surface terminale (31) ; le trou taraudé s'étend à partir de la troisième surface terminale (31) à travers la quatrième surface terminale (33).

5. Fixation à vis (100) selon la revendication 4, dans laquelle la seconde portion de position (311) est disposée sur la troisième surface terminale (31) et correspond au point de départ du filet de vis du trou taraudé.

6. Fixation à vis (100) selon l'une quelconque des revendications 1 à 5, dans laquelle la première vis (10) est un boulon, la seconde vis (30) est un écrou configuré pour s'engrener par filet de vis avec le boulon.

7. Procédé de fixation comprenant le fait de :
procurer un robot possédant un système de commande, un système de serrage et un système de vision artificielle, le mécanisme de serrage et le système de vision artificielle étant mis en communication par signaux avec le système de commande ;
procurer une fixation à vis (100) comprenant une première vis (10) et une seconde vis (30) configurée pour s'engrener par filet de vis avec la première vis (10), la première vis (10) comprenant une portion filetée (143) et une première portion de position (1211) adjacente à la portion filetée (143) ; la seconde vis (30) définit un trou taraudé, et une seconde portion de position (311) correspondant à la première portion de position (1211), la première vis (10) comprend une tête (12) et une tige (14) couplée à la tête (12), la portion filetée (143) est disposée sur la tige (14) et la première portion de position (1211) étant disposée sur la tête (12) ;
procurer deux pièces à usiner qui doivent être fixées l'une à l'autre, chaque pièce à usiner possédant un trou de passage ; insérer la première vis (10) à travers les trous de passage ;
amener la seconde vis (30) à une position adjacente à la première vis (10) via le mécanisme de serrage commandé par le système de commande après que le système de vision artificielle a reconnu la première portion de position (1211) et la seconde portion de position (311) ; d'une manière telle que la seconde portion de position (311) est mise en alignement avec la première portion de position (1211) ; et
mettre la seconde vis (30) en rotation via la portion de serrage, si bien que la seconde vis (30) vient se disposer par filet de vis sur la première vis (10).

8. Procédé de fixation comprenant le fait de :
procurer un robot possédant un système de commande, un système de serrage et un système de vision artificielle, le mécanisme de serrage et le système de vision artificielle étant mis en communication par signaux avec le système de commande ;
procurer une première vis (10) possédant une première portion filetée (143), et une première portion de position (1211) ; dans laquelle un point central de la première portion de position (1211) est relié perpendiculairement à un axe central de la première portion filetée (143) pour définir un premier segment de droite fictif (***a***) ; un point de départ du filet de vis de la première portion filetée (143) est relié perpendiculairement à l'axe central pour définir un deuxième segment de droite fictif (***b***), la première vis (10) comprenant une tête (12) et une tige (14) couplée à la tête (12), la première portion filetée (143) étant disposée sur la tige (14) et la première portion de position (1211) est disposée sur la tête (12) ;
procurer une pièce à usiner possédant une seconde portion filetée (143) configurée pour s'engrener par filet de vis avec la première portion filetée (143), et une seconde portion de position (311) adjacente à la seconde portion filetée (143) ; dans lequel un point central de la seconde portion de position (311) est relié perpendiculairement à un axe central de la seconde portion filetée (143) pour définir un cinquième segment de droite fictif; un point de départ de filet de vis de la seconde portion filetée (143) est relié perpendiculairement à l'axe central de la seconde portion filetée (143) pour définir un sixième segment de droite fictif ; lorsque la seconde portion filetée (143) est coaxiale à la première portion filetée (143) sur la première vis (10), et le deuxième segment de droite fictif (***b***) est parallèle au sixième segment de droite fictif, le premier segment de droite fictif **(*a*)** est parallèle au cinquième segment de droite fictif.
amener la première vis (10) à une position adjacente à la seconde portion filetée (143) via le mécanisme de serrage commandé par le système de commande après que le système de vision artificielle a reconnu la première portion de position (1211) et la seconde portion de position (311) ; d'une manière telle que la première portion de position (1211) est mise en alignement avec la seconde portion de position (311) ; et
mettre la première vis (10) via la portion de serrage, d'une manière telle que la première vis (10) vient s'engrener par filet de vis dans la seconde portion filetée (143).

9. Procédé de fixation selon la revendication 8, dans lequel le système de vision artificielle comprend un module d'acquisition d'images configuré pour acquérir une image d'un environnement externe, et un module de traitement visuel configuré pour analyser les données de l'image afin de reconnaître des objets dans l'image, et fournir et transférer des informations des objets au système de commande.

10. Procédé de fixation selon l'une quelconque des revendications 8 et 9, dans lequel la première vis (10) est un boulon, la première portion filetée (143) est un filet de vis externe formé sur la première vis (10) ; la seconde portion filetée (143) est un filet de vis interne formé sur la pièce à usiner.

11. Procédé de fixation selon l'une quelconque des revendications 8 et 9, dans lequel la tête (12) comprend une première surface terminale (121), la tige (14) comprend une portion polie (141) couplée à la première surface terminale (121), la première portion filetée (143) est couplée à une extrémité de la portion polie (141) à l'écart de la première surface terminale (121), la première portion de position (1211) est disposée sur la première surface terminale (121) et correspond au point un départ du filet de vis de la première portion filetée (143).

12. Procédé de fixation selon l'une quelconque des revendications 8 et 9, dans lequel la première vis (10) est un écrou, la première portion filetée (143) est un filet de vis interne formé sur la première vis (10) ; la seconde portion filetée (143) est un filet de vis externe formé sur la pièce à usiner.

13. Procédé de fixation selon la revendication 12, dans lequel la première vis (10) comprend une troisième surface terminale (31), une quatrième surface terminale (33) parallèle à la troisième surface terminale (31) et s'écartant de la troisième surface terminale (31) ; la première portion filetée (143) s'étend à partir de la troisième surface terminale (31) à travers la quatrième surface terminale (33), la première portion de position (1211) est disposée sur la troisième surface terminale (31) et correspond au point de départ du filet de vis de la première portion filetée (143).
